# EUROPÄISCHE PATENTSCHRIFT

(11) **EP 0 872 297 B1**
(45) Veröffentlichungstag und Bekanntmachung des Hinweises auf die Patenterteilung: **04.10.2001**
(21) Anmeldenummer: 98810033.5
(22) Anmeldetag: 22.01.1998
(51) Int. Cl.: B23B 49/00, B23B 51/08

(54) **Kombi-Bohrwerkzeug**
Combination drilling tool
Outil de forage combiné

(30) Priorität: 18.03.1997 DE 19711261
(43) Veröffentlichungstag der Anmeldung: 21.10.1998
(73) Patentinhaber: HILTI Aktiengesellschaft, 9494 Schaan (LI)
(72) Erfinder: Popp, Franz, 86807 Buchloe (DE); Bisping, Heinz, 86163 Augsburg (DE); Belz, Thomas, 86916 Kaufering (DE)
(74) Vertreter: Wildi, Roland

(56) Entgegenhaltungen:
- EP-B- 0 086 452
- DE-A- 2 122 119
- DE-A- 2 402 516
- DE-U- 6 813 225
- DE-U- 8 403 969
- DE-U- 9 106 606
- DE-U- 9 206 757
- FR-A- 507 949
- GB-A- 639 490
- US-A- 5 078 552

## Beschreibung

Die Erfindung betrifft ein Kombi-Bohrwerkzeug gemäss dem Oberbegriff des Patentanspruchs 1 (siehe DE-U-6 813 225).

Kombi-Bohrwerkzeuge sind drehantreibbare Werkzeuge für Bohrgeräte, die neben einem Bohrer ein Zusatzelement umfassen, das axial versetzt am Schaft des Bohrers angeordnet ist und dessen Verbindung mit dem Schaft die Übertragung von Drehmoment erlaubt. Das Zusatzelement kann beispielsweise ein Fräskopf oder ein Senkkopf sein. In der Anwendung des Kombi-Bohrwerkzeugs wird zunächst mit dem Bohrer die Bohrung erstellt und im selben Arbeitsgang gegen Ende des Bohrvorgangs eine Vertiefung oder eine Senkung in die Oberfläche des Untergrunds oder eines Anschlussbauteils gefräst. Bei einer bekannten Gattung derartiger Kombi-Bohrwerkzeuge ist der Fräs- oder Senkkopf unlösbar mit dem Schaft des Bohrers verbunden, beispielsweise angeschweisst oder einstückig angeformt. Es ist unmittelbar einsichtig, dass bei derartigen Kombi-Bohrwerkzeugen für jeden gewünschten Bohrdurchmesser ein separates Kombi-Bohrwerkzeug eingesetzt werden muss, dessen Bohrer den gewünschten Durchmesser aufweist. Falls eine grössere Ansenkung oder eine Vertiefung mit grösserem Durchmesser gewünscht wird, muss ebenfalls ein separates Kombi-Bohrwerkzeug eingesetzt werden. Zudem sind Bohrer-Fräser-Kombiwerkzeuge auch nicht in beliebigen Kombinationen erhältlich. Im Fall einer Beschädigung des Bohrers oder des Zusatzelements, beispielsweise des Fräs- oder Senkkopfs, ist das Kombi-Bohrwerkzeug unbrauchbar und es muss gesamthaft ersetzt werden.

Aus der EP-B-0 086 452 ist ein Kombi-Werkzeug bekannt, das es erlaubt, in einem Arbeitsgang eine Bohrung im Untergrund zu erstellen und dabei zugleich in der Oberfläche einer zu befestigenden Isolierstoffplatte ein Senkloch anzubringen. Dieses bekannte Kombi-Bohrwerkzeug umfasst einen Bohrer und einen Fräskopf, der über eine Schraubverbindung mit dem Schaft des Bohrers verbunden ist. Die Verbindung des Fräskopfes mit dem Schaft des Bohrers ist lösbar. Auf diese Weise kann der Bohrer in Verbindung mit verschieden grossen Fräsköpfen eingesetzt werden, oder es kann ein Fräskopf mit Bohrern unterschiedlicher Durchmesser eingesetzt werden. Falls der Fräskopf oder der Bohrer abgenutzt oder beschädigt sind, können sie ausgetauscht werden. Für die lösbare Verbindung des Bohrers und des Fräskopfes ist der Schaft des Bohrers im Anschluss an die Förderwendeln mit einem Gewinde versehen. Eine am Schaft angeordnete Anschlagschulter dient der Festlegung der axialen Position des Fräskopfes. Der aus Metall bestehende Fräskopf ist mit einer Bohrung versehen, die ein Innengewinde aufweist, das auf das Gewinde am Schaft des Bohrers abgestimmt ist. Die Verbindung des Fräskopfes mit dem Bohrer erfolgt durch Verschrauben. Zur Änderung der axialen Position des Fräskopfes können zwischen dem Fräskopf und der Anschlagschulter entsprechend dicke Zwischenlegescheiben angeordnet werden.

Dieses bekannte Kombi-Bohrwerkzeug weist gegenüber den Varianten mit unlösbaren Verbindungen zwischen dem Bohrerschaft und dem Zusatzelement, beispielsweise einem Fräskopf, den Vorteil auf, dass der Fräskopf bzw. der Bohrer austauschbar ist, indem die Schraubverbindung gelöst wird. Allerdings erweist sich die Schraubverbindung als nicht besonders standhaft. Insbesondere in Verbindung mit axialschlagunterstützten Bohrgeräten ist die Haltbarkeit der Schraubverbindung weit geringer als die Lebensdauer des Bohrers. Durch die Einwirkung der axialen Schläge wird das Gewinde am Schaft des Bohrers und/oder in der Bohrung des Fräskopfes mit der Zeit beschädigt. Dies kann dazu führen, dass der Fräskopf nicht mehr vom Schaft lösbar ist oder es werden beim Lösen der Schraubverbindung die Gewinde derart stark beschädigt, dass der Fräskopf und/oder der Bohrer nicht mehr miteinander oder mit anderen Bohrern oder Fräsköpfen verbindbar sind. Bei dem aus dem Stand der Technik bekannten Kombi-Bohrwerkzeug ist ein speziell ausgebildeter Bohrer erforderlich. Am Schaft des Bohrers muss im Anschluss an die Föderwendeln ein Gewinde vorgesehen sein. Zur axialen Fixierung des aufgeschraubten Förderkopfes ist am Ende des Gewindeabschnittes des Schaftes eine Anschlagschulter erforderlich. Dies kompliziert die Herstellung des Bohrers und verteuert das Kombi-Bohrwerkzeug.

Die DE-GM6813225 offenbart als Zusatzelement eine als Tiefenanschlag einsetzbare ringförmige Bohrhilfe, welche über das Bohrwerkzeug geschoben und mit diesem lösbar verbunden ist, wobei dieses Zusatzelement ein elastisches Kunststoffteil umfasst, welches mit einer Durchgangsbohrung zur Aufnahme des Schafts des Bohrwerkzeugs versehen ist und mit diesem einen Kraft- und/oder Formschluss eingeht.

Aufgabe der vorliegenden Erfindung ist es daher, ein Kombi-Bohrwerkzeug dahingehend zu verbessern, dass seine Lebensdauer von der Lebensdauer des Bohrers bestimmt wird. Es soll ein Kombi-Bohrwerkzeug geschaffen werden, das einen Bohrer und ein Zusatzelement umfasst, die lösbar miteinander verbunden sind. Die Verbindung soll weitgehend unempfindlich sein gegenüber den axialen Schlägen von Schlag- oder Hammerbohrgeräten. Es soll kein speziell ausgebildeter Bohrer erforderlich sein, sondern es soll ein Kombi-Bohrwerkzeug geschaffen werden, bei dem verschiedenartige Zusatzelemente mit handelsüblichen Bohrern verbindbar sind. Die Herstellung des Kombi-Bohrwerkzeugs soll einfach und kostengünstig sein. Der Anwender soll einfach in der Lage sein, sein gewünschtes Kombi-Bohrwerkzeug mit den gewünschten Durchmessern und Funktionen zusammenzustellen.

Diese Aufgaben werden durch ein Kombi-Bohrwerkzeug gelöst, das die im Patentanspruch 1 angeführten Merkmale aufweist. Das erfindungsgemäss ausgebildete Kombi-Bohrwerkzeug umfasst einen Bohrer, insbesondere einen Gesteinsbohrer, der an seinem bohrwirksamen Ende mit Bohrschneiden ausgestattet ist und einen mit Förderwendeln versehenen Schaft aufweist, und ein mit dem Schaft des Bohrers lösbar verbundenes Zusatzelement. Das Zusatzelement ist mit wenigstens einem elastischen Kunststoffteil ausgestattet, das mit einer Durchgangsbohrung zur Aufnahme des Schafts des Bohrers versehen ist und durch Kraft- und/oder Formschluss am Schaft gegen unbeabsichtigtes axiales Verschieben gesichert und gegenüber Drehmomenten von bis zu 40 Nm drehfest von-4-gehalten ist.

Als Materialien, die einserseits eine ausreichend grosse Elastizität aufweisen, damit die Verbindung zwischen dem Zusatzelement und dem Schaft des Bohrers weitgehend unempfindlich gegenüber den im Betrieb auf das Kombi-Bohrwerkzeug ausgeübten axialen Schläge ist, und die andererseits einen ausreichend hohen Kraftschluss mit dem Schaft aufbauen, erweisen sich thermoplastische oder vemetzende Elastomere mit einer Härte nach DIN 53505 von 50 bis 100 Shore A und einer Bruchdehnung nach DIN 53504 von ≥ 150 % als sehr zweckmässig.

Das Zusatzelement ist mit einem oder mehreren elastischen Kunststoffteilen versehen, die zur Verbindung mit dem Schaft des Bohrers eine axiale Durchgangsbohrung aufweisen. Der Schaft wird einfach durch die Bohrungen der Kunststoffteile geschoben und durch Kraft- und/oder Formschluss axial und drehfest am Schaft fixiert. Die Montage des Zusatzelements am Schaft des Bohrers erfolgt beispielsweise unter Zuhilfenahme einer Spindelpresse. Diese kann auch für die Demontage eingesetzt werden. Wegen der Elastizität der Kunststoffteile kann das Zusatzteil in Verbindung mit Bohrern unterschiedlicher Durchmesser eingesetzt werden. Es sind keine Bohrer mit speziell ausgebildetem Schaft mit Gewinde und mit Anschlagschulter erforderlich. Das Zusatzelement wird einfach auf den Schaft handelsüblicher Bohrer aufgepresst. Dadurch ist eine einfache und kostengünstige Herstellung des Kombi-Bohrwerkzeugs ermöglicht. Sollte das Zusatzteil nicht benötigt werden, kann es demontiert werden. Der Bohrer ist dann von konventionellen Bohrern nicht zu unterscheiden. Wegen der Elastizität der Kunststoffteile ist die Verbindung des Zusatzelements und des Schafts gegenüber den im Betrieb auf das Kombi-Bohrwerkzeug ausgeübten axialen Schlägen einer Frequenz von bis zu 4000 Schlägen je Minute, bei einer Einzelschlagenergie von bis zu 7 J weitgehend unempfindlich. Dadurch wird die Lebensdauer des Kombi-Bohrwerkzeugs im wesentlichen von der Lebensdauer des Bohrers bestimmt. Sollte das Zusatzelement beschädigt sein, kann es einfach ausgetauscht werden. Im Fall eines Versagens des Bohrers kann ein neuer Bohrer des gewünschten Durchmessers mit dem Zusatzelement verbunden werden.

Indem die Durchgangsbohrung der Kunststoffelemente einen Bohrungsdurchmesser aufweist, der dem Durchmesser des Schafts des Bohrers multipliziert mit einem Faktor von etwa 0,35 bis etwa 0,85 entspricht, wird das Zusatzelement im wesentlichen durch Presssitz am Schaft des Bohrers gehalten. Der Presssitz kann durch einen Formschluss unterstützt sein, den das bzw. die elastischen Kunststoffteil(e) mit den Förderwendeln des Bohrers eingehen.

Für die Erzielung der gewünschten Drehmomentübertragung erweist es sich als vorteilhaft, wenn das bzw. die Kunststoffteile eine axiale Gesamtstärke aufweisen, die mindestens 15% der Länge des Schafts ausmacht und die kleiner ist als die Länge des Schafts. Im Fall nur eines Kunststoffteils bezieht sich die Gesamtstärke auf die axiale Erstreckung des einzelnen Kunststoffteils. Falls das Zusatzelement mehrere Kunststoffteile aufweist, betrifft die Gesamtstärke die Summe der axialen Erstreckungen der einzelenen Kunststoffteile.

Für die übertragbaren Drehmomente einerseits und für die axiale Eigenstabilität des Zusatzelements anderseits erweist es sich von Vorteil, wenn das wenigstens eine Kunststoffelement einen Aussendurchmesser aufweist, dessen Verhältnis zum Bohrungsdurchmesser grösser oder gleich 1,5 ist aber 5 nicht überschreitet.

In einer vorteilhaften Ausführungsvariante des Kombi-Bohrwerkzeugs ist das wenigstens eine elastische Kunststoffteil innerhalb eines im wesentlichen hülsenförmigen Aufnahmeteils gehalten. Dabei weist das Aufnahmeteil einen Innendurchmesser auf, der kleiner ist als der Aussendurchmesser des Kunststoffteils. Das Aufnahmeteil besitzt auch eine grössere Härte als das Kunststoffteil; vorzugsweise ist es eine Metallhülse. Auf diese Weise ist das Kunststoffteil im wesentlichen durch Presssitz im Aufnahmeteil gehalten. Der Pressitz kann durch geeignete Ausbildung der Innenfläche des Aufnahmeteils noch durch einem Formschluss unterstützt werden, um die drehfeste Verbindung zwischen dem Aufnahmeteil und dem wenigstens einen Kunststoffteil noch weiter zu verstärken.

Das Zusatzelement des Kombi-Bohrwerkzeugs kann unterschiedliche Funktionen. erfüllen. Beispielsweise kann es als Fräskopf oder als Senker ausgebildet sein. In einer altemativen Ausführungsvariante des erfindungsgemässen Kombi-Bohrwerkzeugs kann es als Tiefenanschlag dienen. Für die unterschiedlichen Anwendungen ist das hülsenförmige Aufnahmeteil an seinem den Schneiden des Bohrer zugewandten axialen Ende mit Schneidelementen, Markiereinrichtungen oder dergleichen ausgestattet. Die zylindrische Aussenfläche des Aufnahmeteils ist mit Vorteil glatt. Dadurch können mit einem Zusatzteil auch mehrere unterschiedliche Funktionen ausgeführt werden. Insbesondere kann das Zusatzelement wegen der glatten Aussenfläche des Aufnahmeteils beim Bohren durch ein im Abstand vom Untergrund angeordneten Bauteil seitliche Führungsfunktionen übemehmen.

Der axiale Abstand der am hülsenförmigen Aufnahmeteil angeordneten Schneidelemente, Markiereinrichtungen oder dergleichen von den Bohrschneiden des Bohrers ist verstellbar, indem das wenigstens eine Kunststoffteil entlang des Schafts axial verschiebbar ist. Es sind keine Zwischenlegescheiben erforderlich, um die axiale Höhe des Zusatzteils am Schaft festzulegen. Das Zusatzteil ist im wesentlichen allein durch den Presssitz am Schaft fixiert.

Im folgenden wird die Erfindung anhand eines Ausführungsbeispiels, unter Bezugnahme auf die schematischen Darstellungen, näher erläutert. Es zeigen:
- Fig. 1: ein Beispiel eines erfindungsgemässen Kombi-Bohrwerkzeugs; und
- Fig.2: ein Kunststoffteil.

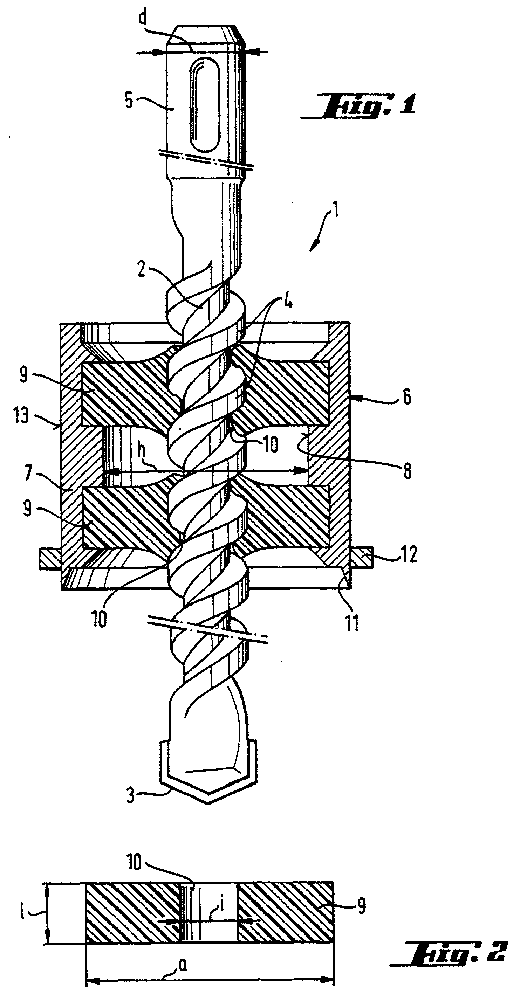

Das in der Gesamtdarstellung der Fig. 1 und der Detaildarstellung in Fig. 2 gezeigte Ausführungsbeispiels des erfindungsgemässen Kombi-Bohrwerkzeugs ist gesamthaft mit dem Bezugszeichen versehen. Es umfasst einen Bohrer, beispielsweise einen Gesteinsbohrer, mit einem Schaft 2, an dessen Vorderende Bohrschneiden 3 angeordnet sind. Am Schaft 2 sind Förderwendeln 4 angeordnet, die sich von den Bohrschneiden 3 zu einem am rückwärtigen Endes des Bohrers vorgesehenen Einsteckende 5 erstrecken. Das Einsteckende 5 kann zylindrisch ausgebildet sein, wie es für Schlagbohrgeräte mit Spannbackenfutter eingesetzt wird. Im dargestellten Ausführungsbeispiel ist das Einsteckende 5 für eine SDS+® Werkzeugaufnahme eines Hammerbohrgerätes ausgebildet.

Am Schaft 2 des Bohrers ist ein Zusatzelement 6 befestigt, das, wie beispielsweise dargestellt, an seinem den Bohrerschneiden 3 zugewandten Vorderende mit Schneidelementen 11 ausgestattet ist. Das Zusatzelement 6 ist über Kunststoffteile 9, die in einer zylindrischen Metallhülse 7 befestigt sind, lösbar mit dem Schaft 2 verbunden. Dazu ist der Schaft 2 des Bohrers durch die konzentrisch angeordneten axialen Durchgangsbohrungen 10 der Kunststoffteile 9 geführt. Der Bohrungsdurchmesser i der Durchgangsbohrung 10 ist kleiner als der Durchmesser d des Schafts 2 des Bohrers. Die Kunststoffteile 9 können ihren Aussendurchmesser beim Aufschieben auf den Schaft 2 in radialer Richtung nicht aufweiten, da sie in der starren , Metallhülse 7 im Presssitz gehalten sind. Der Presssitz entsteht dadurch, dass der Innerdurchmesser h der Metallhülse 7 kleiner ist als der Aussendurchmesser a eines Kunststoffteils 9. Der Presssitz der Kunststoffteile 9 kann, wie dargestellt, durch geeignete Ausbildung der Innenfläche 8 der Metallhülse 7 durch einen Formschluss unterstützt sein.

Die Verbindung zwischen dem Zusatzelement 6 und dem Schaft 2 des Bohrers erfolgt im wesentlichen durch einen Kraftschluss, indem die Kunststoffteile 9 durch den einen grösseren Durchmesser d aufweisenden Schaft 2 komprimiert werden. Die Komprimierung der Kunststoffteile 9 ist in Fig. 1 durch die Materialverdickungen im Randbereich der Durchgangsbohrungen 10 angedeutet. Der Kraftschluss wird durch einen Formschluss unterstützt, der sich dadurch ergibt, dass das elastische Material der Kunststoffteile 9 zwischen die Gänge der Förderwendeln 4 gepresst wird. Die Montage des Zusatzelements 6 am Schaft 2 des Bohrers und die Einstellung des axialen Abstands der Schneidelemente 11 des Zusatzelements 6 von den Bohrschneiden 3. kann beispielsweise mit Hilfe einer Spindelpresse erfolgen. Anstelle einer Spindelpresse kann auch ein geeignet ausgebildetes Hebelwerkzeug eingesetzt werden, mit dem die erforderlichen Drücke aufbringbar sind.

Die axiale Erstreckung der Kunststoffteile 9 addiert sich zu einer Gesamtstärke I, die mindestens 15% der Länge des Schafts 2 ausmacht und die kleiner ist als die Länge des Schafts. Das Verhältnis des Aussendurchmessers a der Kunststoffteile 9 zum Bohrungsdurchmesser i ist grösser oder gleich 1,5 und kleiner oder gleich 5. Der Bohrungsdurchmesser i der Durchgangs-bohrung 10 entspricht dem Durchmesser d des Schafts 2 des Bohrers, multipliziert mit einem Faktor von etwa 0,35 bis etwa 0,85. Das kraft- und formschlüssig gehaltene Zusatzelement 6 ist axial fixiert und zur Übertragung von Drehmomenten von bis zu 40 Nm ausgebildet. Die Kunststoffteile 9 bestehen aus einem thermoplastischen oder vernetzenden Elastomere mit einer Härte nach DIN 53505 von etwa 50 bis etwa 100 Shore A und einer Bruchdehnung nach DIN 53504 von ≥ 150 %.

Wie in Fig. 1 dargestellt, sind die Schneidelemente des Zusatzteils 6 am Vorderende der Metallhülse 7 angeordnet. Die Metallhülse 7 weist eine glatte Aussenfläche 13 auf, die beispielsweise als seitliche Führung dienen kann. Im Fall eines als Tiefenanschlag dienenden Zusatzelements 6 kann, wie dargestellt, am Vorderende der Metallhülse eine Anschlagschulter 12 in Form eines an der Aussenfläche 13 umlaufenden Ringbunds vorgesehen sein. Das in Fig. 1 dargestellte Kombi-Bohrwerkzeug 1 ist mit einem Zusatzelement 6 ausgestattet, das Schneidelemente 11 und einen Ringbund 12 aufweist. Dadurch ist das Kombi-Bohrwerkzeug 1 für Bohren und Schneiden bzw. Markieren in einem Arbeitsgang geeignet, wobei der Ringbund 12 einen Tiefenanschlag darstellt: Es versteht sich, dass das Zusatzelement auch nur einen Teil der Funktionselemente aufweisen kann. Beispielsweise kann sein Vorderende konisch auf den Schaft des Bohrers zulaufend ausbebildet sein und im konischen Bereich mit Schneidelemente ausgestattet sein. Derart ausgebildet handelt es sich bei dem Zusatzelement um einen Fräskopf, mit dem in den Untergrund oder in ein Anschlussbauteil eine Vertiefung eingefräst werden kann. Das Zusatzelement kann auch, ähnlich dem in Fig. 1 dargestellten Ausführungsbeispiel, an seinem Vorderende mit einer Ringschneide ausgestattet sein, die als Markierungschneide mit Tiefenanschlagsfunktion wirkt. Für den Fachmann sind noch weitere Ausführungsbeispiele von Zusatzelementen vorstellbar, die gemäss der Erfindung mit dem Schaft des Bohrers zu einem Kombi-Bohrwerkzeug verbindbar sind.

## Patentansprüche

1. Kombi-Bohrwerkzeug umfassend einen Bohrer, insbesondere einen Gesteinsbohrer, der an seinem bohrwirksamen Vorderende mit Bohr- schneiden (3) ausgestattet ist und einen mit Förderwendeln (4) versehenen Schaft (2) aufweist, und ein mit dem Schaft (2) des Bohrers lösbar verbundenes Zusatzelement (6), das mit einer Durchgangsbohrung (10) zur Aufnahme des Schafts (2) des Bohrers versehen ist und durch Kraft- und/oder Formschluss am Schaft (2) gegen unbeabsichtigtes axiales Verschieben gesichert ist, **dadurch gekennzeichnet, dass** das Zusatzelement (6) wenigstens ein elastisches Kunststoffteil (9) aus einem thermoplastischen oder vernetzenden Elastomer mit einer Härte nach DIN 53505 von 50 bis 100 Shore A und einer Bruchdehnung nach DIN 53504 von ≥ 150 % umfasst, und gegenüber Drehmomenten von bis zu 40 Nm drehfest gehalten ist.

2. Kombi-Bohrwerkzeug nach Anspruch 1, **dadurch gekennzeichnet, dass** die Durchgangsbohrung (10) einen Bohrungsdurchmesser (i) aufweist, der dem Durchmesser (d) des Schafts (2) des Bohrers, multipliziert mit einem Faktor von etwa 0,35 bis etwa 0,85 entspricht.

3. Kombi-Bohrwerkzeug nach Anspruch 1 oder 2, **dadurch gekennzeichnet, dass** das wenigstens eine Kunststoffteil (9) eine axiale Gesamtstärke (I) aufweist, die mindestens 15% der Länge des Schafts (2) ausmacht und die kleiner ist als die Länge des Schafts (2).

4. Kombi-Bohrwerkzeug nach einem der vorangehenden Ansprüche, **dadurch gekennzeichnet, dass** das wenigstens eine Kunststoffelement (9) einen Aussendurchmesser (a) aufweist, wobei das Verhältnis des Aussendurchmessers (a) zum Bohrungsdurchmesser (i) grösser oder gleich 1,5 ist aber 5 nicht überschreitet.

5. Kombi-Bohrwerkzeug nach Anspruch 4, **dadurch gekennzeichnet, dass** das wenigstens eine elastische Kunststoffteil (9) innerhalb eines im wesentlichen hülsenförmigen Aufnahmeteils (7) gehalten ist, dessen Innendurchmesser (h) kleiner ist als der Aussendurchmesser (a) des Kunststoffteils (9) und das eine grössere Härte aufweist als das Kunststoffteil (9).

6. Kombi-Bohrwerkzeug nach Anspruch 5, **dadurch gekennzeichnet, dass** das hülsenförmige Aufnahmeteil (7) an seinem den Bohrschneiden (3) des Bohrers zugewandten axialen Ende mit Schneideelementen (11), Markiereinrichtungen oder dergleichen ausgestattet ist

7. Kombi-Bohrwerkzeug nach Anspruch 6, **dadurch gekennzeichnet, dass** der axiale Abstand der am hülsenförmigen Aufnahmeteil (7) angeordneten Schneidelemente (11), Markiereinrichtungen oder dergleichen von den Bohrschneiden (3) des Bohrers verstellbar ist, indem das wenigstens eine Kunststoffteil (9) entlang des Schafts (2) axial verschiebbar ist.

## Claims

1. Combination drilling tool, comprising a drill, in particular a masonry drill, which is at its drilling front end equipped with drilling cutters (3) and which comprises a shaft (2) provided with conveying spirals (4) and a supplementary element (6) which is detachably attached to the shaft (2) of the drill which is provided with a throughbore (10) for accommodating the shaft (2) of the drill and secured against unintentional axial displacement by load and/or positive closure on shaft (2), **characterised in that** the supplementary element (6) includes at least one elastic plastic element (9) of a thermoplastic or bonding elastomer with a hardness according to DIN 53505 of between 50 and 100 Shore A and a breaking tension according to DIN 53504 of □ 150% and is non-rotationally held relative to torques of up to 40 Nm.

2. Combination drilling tool according to Claim 1, **characterised in that** the throughbore (10) has a drill diameter (i) which corresponds with the diameter (d) of the shaft (2) of the drill multiplied by a factor between approximately 0.35 and approximately 0.85.

3. Combination drilling tool according to Claim 1 or 2, **characterised in that** the at least one plastic element (9) has an axial overall thickness (I) which equals at least 15% of the length of the shaft (2) and which is smaller than the length of the shaft (2).

4. Combination drilling tool according to one of the above claims, **characterised in that** the at least one plastic element (9) has an outside diameter (a), and the ratio of the outside diameter (a) to the bore diameter (i) is greater or equal 1.5, but does not exceed 5.

5. Combination drilling tool according to Claim 4, **characterised in that** the at least one elastic plastic element (9) is held within an essentially sleeveshaped receptacle (7) the inside diameter (h) of which is smaller than the outside diameter (a) of the plastic element (9) and which has a greater strength than the plastic element (9).

6. Combination drilling tool according to Claim 5, **characterised in that** the sleeveshaped receptacle (7) is at its axial end facing towards the drilling cutters (3) of the drill equipped with cutting elements (11), marking devices or the like.

7. Combination drilling tool according to Claim 6, **characterised in that** the axial distance of the cutting elements (11) arranged at the sleeveshaped receptacle (7), marking devices or the like are adjustable by the drilling cutters (3) of the drill **in that** the at least one plastic element (9) is axially displaceable along the shaft (2).

## Revendications

1. Outil de forage combiné comprenant un fleuret, notamment un fleuret pour roche, qui est équipé de taillants de forage (3) à son extrémité avant opérant le forage, et qui comporte une tige (2) pourvue d'hélices de transport (4), et comprenant un élément supplémentaire (6), relié de manière séparable à la tige (2) du fleuret, et qui est pourvu d'un trou débouchant (10) destiné à recevoir la tige (2) du fleuret, et qui est bloqué contre un déplacement axial involontaire à force et/ou par complémentarité de forme sur la tige (2), **caractérisé en ce que** l'élément supplémentaire (6) comprend au moins une partie élastique en matière plastique (9) constituée d'un élastomère thermoplastique ou réticulant d'une dureté de 50 à 100 Shore A selon la norme DIN 53505, ainsi qu'un allongement à la rupture ≥ 150% selon la norme DIN 53504, et est maintenu de manière à ne pouvoir tourner sous l'effet de couples de rotation allant jusqu'à 40 Nm.

2. Outil de forage combiné selon la revendication 1, **caractérisé en ce que** le trou débouchant (10) présente un diamètre (i) qui correspond au diamètre (d) de la tige (2) du fleuret, multiplié par un facteur d'environ 0,35 à environ 0,85.

3. Outil de forage combiné selon la revendication 1 ou 2, **caractérisé en ce qu'**au moins une partie en matière plastique (9) présente une épaisseur axiale totale (1) qui représente au moins 15 % de la longueur de la tige (2) et qui est plus petite que la longueur de la tige (2).

4. Outil de forage combiné selon l'une des revendications précédentes, **caractérisé en ce que** le ou les éléments en matière plastique (9) présentent un diamètre extérieur (a), le rapport du diamètre extérieur (a) au diamètre de trou (i) étant supérieur ou égal à 1,5, mais ne dépassant pas 5.

5. Outil de forage combiné selon la revendication 4, **caractérisé en ce que** la ou les pièces en matière plastique élastique (9) sont maintenues à l'intérieur d'une partie de logement (7) sensiblement en forme de douille, dont le diamètre intérieur (h), est inférieur au diamètre extérieur (a) de la pièce en matière plastique (9) et qui présente une plus grande dureté que la pièce en matière plastique (9).

6. Outil de forage combiné selon la revendication 4, **caractérisé en ce que** la partie de logement (7) en forme douille est équipée, à son extrémité axiale tournée vers les taillants de forage (3) du fleuret, d'éléments de coupe (11), de dispositifs de marquage ou similaires.

7. Outil de forage combiné selon la revendication 6, **caractérisé en ce que** la distance axiale des éléments de coupe (11), dispositifs de marquage ou similaires, disposés sur la partie de logement (7) en forme de douille, est réglable par rapport aux taillants de forage (3) du fleuret, **en ce que** la ou les pièces en matière plastique (9) sont déplaçables axialement le long de la tige (2).
